# EUROPEAN PATENT SPECIFICATION

(11) **EP 0 868 050 B1**
(45) Date of publication and mention of the grant of the patent: **02.11.2006**
(21) Application number: 98302055.3
(22) Date of filing: 18.03.1998
(51) Int. Cl.: H04L 12/44, H04L 29/08

(54) **Network switch**
Netzvermittlung
Commutateur de réseau

(30) Priority: 27.03.1997 GB 9706379
(43) Date of publication of application: 30.09.1998
(73) Proprietor: TEXAS INSTRUMENTS LIMITED, Northampton Business Park, Northampton NN4 7YL (GB); TEXAS INSTRUMENTS INCORPORATED, Dallas, Texas 75265 (US)
(72) Inventor: Szczepanek, Andre, Hartwell NN7 2HT (GB); Rowell, Anthony, Irchester NN29 7ED (GB)
(74) Representative: Legg, Cyrus James Grahame

(56) References cited:
- EP-A- 0 424 774
- WO-A-98/11696
- US-A- 5 561 669

## Description

The present invention relates to switching circuits for computer networks.

In a computer network, such as Ethernet (IEEE standard 802.3), packets of data are sent from one computer, or other device, for example a network printer, to another along a set of conductors that are connected to all the computers in common. That means that only one device on the network can send a packet of data at any one time. That problem may be overcome with a circuit known as a switch to which several sets of network conductors are connected. Each set is connected to only one device, or a small number of devices connected in common. A packet received by the switch on one set of conductors is sent out on another set according to the network address of the intended recipient as quoted in the packet. In this way two or more computers may send packets at the same time to respective recipients. Variants of these devices are known variously in the art as switches, bridges and routers. Herein the term switch includes all such variants.

A known form of switch comprises a switch integrated circuit which has a plurality of ports each comprising a set of pins for data and control signals. Each port is connected to a respective physical interface circuit which drives a respective set of network conductors connected to it when transmitting a packet, and converts the pulses present on those conductors into pulses suitable for the switch integrated circuit when receiving a packet. The switch integrated circuit reads the network address in each packet and forwards it to the appropriate device on the network via the appropriate one of its ports.

The switch is divided into a switch integrated circuit and physical interface circuits since different physical interface circuits will be required depending on the cabling and the pulse modulation protocol being used. Also it may be desirable to construct the physical interface circuits and switch integrated circuits using different integrated circuit technologies given the different noise requirements and voltage levels employed.

Switches typically connect eight or sixteen sets of network conductors. Each set is usually contained in a single cable. Usually a single switch integrated circuit is employed to switch packets between those sets and so a switch integrated circuit typically has eight or sixteen ports. Typically each port has typically nine pins. In addition to those pins, the switch integrated circuit has pins for connection to random access memory, for signals that control its mode of operation, and for driving indicator LED's. The large total number of pins required means that the packages for the switch integrated circuits are expensive. Also the large number of contact pads necessary to connect to those pins take up area on the semiconductor die limiting the area available for circuitry.

The present invention aims to reduce the number of pins required.

The International patent application published under the number WO98/11696 entered the entered the regional phase before the European Patent office designating the United Kingdom only and so is part of the state of the art under Articles 54 and 108 EPC for the United Kingdom designation only. WO98/11696 discloses a multiplexed interface for connecting MAC and PHY circuits of an Ethernet switch.

According to a first aspect of the present invention there is provided an integrated circuit for switching packets of data comprising,
a port comprising a plurality of terminals of the integrated circuit through which packets are received and transmitted,
a plurality of transceiver circuits into which packets from the port are received and from which packets are transmitted to the port,
switching means for transferring packets between the transceiver circuits, and
multiplexing means for connecting the transceiver circuits to the port during successive periods of time.

The switch integrated circuit may be so arranged that a transceiver circuit transmits to the port during a different one of the said periods from the one of the said periods during which it receives from the port.

The transceiver circuit may transmit to the port two of the said periods later than it receives from the port.

A plurality of data bits of a packet and/or successive values of a control signals may be transmitted via the port in parallel at the same time.

The switch integrated circuit may be arranged to transmit only a single data bit or value of a control signal via a terminal of the port during one of the said periods.

The switch integrated circuit may be arranged to transmit a plurality of data bits and/or values of control signals via a terminal of the port during one of the said periods, and that plurality may be provided by the transceiver circuit corresponding to that period.

The switch integrated circuit may comprise a counter for determining which of the transceiver circuits is connected to the port during a particular one of the said periods, and that counter may be arranged to be reset by a signal from a terminal of the integrated circuit.

The multiplexing means may comprise a multiplexer for selecting from the outputs of the transceiver circuits the outputs of a selected transceiver and connecting those outputs to the output terminals of the port.

The multiplexing means may comprise a bus for distributing the signals received on the input terminals of the port to the inputs of all of the transceivers and may comprise means for signalling a selected transceiver to latch the signals on the bus.

The switch integrated circuit may comprise a further port, or ports, via which packets are transmitted or received.

The switch integrated circuit may comprise a further multiplexing means for connecting a second plurality of transceiver circuits to a particular one of the said further ports during successive period of time.

Packets transmitted or received by a particular one of said further ports may be received in and transmitted from a transceiver circuit corresponding to that port, and those packets may be received by the transceiver circuit directly from that port and may be transmitted by the transceiver directly to that port.

A said transceiver circuit may be arranged to receive a data valid signal from the port during the said periods of time allotted to that transceiver circuit and to form data received from the port into a packet, except for data received when the data valid signal is set to a false value, and the transceiver circuit may recognise the end of a packet when the data valid signal is set to a false value during two successive ones of the periods allotted to that transceiver.

According to a second aspect of the invention there is provided a physical interface integrated circuit comprising,
a plurality of network ports for connection to respective network cables,
a plurality of physical interface circuits each connected to a respective network port for sending and receiving packets by that network port,
a switch port for connection to a switch integrated circuit, and
a multiplexing means for connecting the physical interface circuits to the switch port during successive periods of time.

The physical interface integrated circuit may be so arranged that a physical interface circuit transmits to the switch port during a different one of the said periods from the one of the said periods during which it receives from the port.

A physical interface circuit may receive from the switch port two of the said periods later than it transmits the port.

A plurality of data bits or successive values of a control signal may be transmitted via the switch port in parallel at the same time.

The physical interface integrated circuit may be arranged to transmit only a single data bit or value of a control signal via a terminal of the switch port during one of the said periods.

The physical interface integrated circuit may be arranged to transmit a plurality of data bits and/or values of control signals via a terminal of the switch port during one of the said periods, and that plurality may be provided by the physical interface circuit corresponding to that period.

The physical interface integrated circuit may comprise a counter for determining which of the physical interface circuits is connected to the switch port during a particular one of the said periods, and that counter may be arranged to transmit a signal via a terminal of the integrated circuit each time that counter resets.

The multiplexing means of the physical interface integrated circuit may comprise a multiplexer for selecting from the outputs of the physical interface circuits the outputs of a selected physical interface circuit and connecting those outputs to the output terminals of the switch port.

The multiplexing means of the physical interface integrated circuit may comprise a bus for distributing the signals received on the input terminals of the switch port to the inputs of all of the physical interface circuits and may comprise means for signalling a selected physical interface circuit to latch the signals on the bus.

A said physical interface circuit may be arranged to transmit a data valid signal to the switch port and to set that signal to a false value when it has not received from its network port enough data to transmit via the switch port.

According to a third aspect of the invention there is provided a switch circuit comprising a circuit board and connected to each other on that circuit board a switch integrated circuit according to the first aspect of the invention and at least one physical interface integrated circuit according to the second aspect of the invention.

The circuits according to the preceding aspects of the invention may be suitable for a computer network and that network may be Ethernet.

An embodiment of the invention will now be described, by way of example only, with reference to the accompanying drawings, of which:
FIGURE 1 is a block diagram of a known type of switch.
FIGURE 2 is a block diagram of an example of switch according to the present invention.

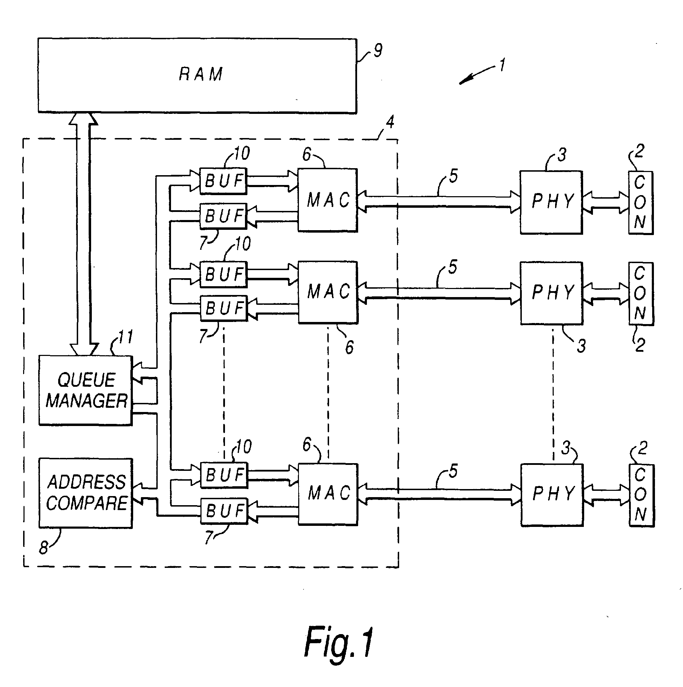

In a known form of switch shown in Figure 1, the switch 1 is connected via respective connectors 2, of which three are shown, to cables (not shown). Each cable connects the switch to either an individual network device or several devices in common. Each device may be a computer, another switch or some other device, for example, a network printer. The cables used in Ethernet either comprise twisted pairs of conductors or coaxial cable.

Each connector 2 is connected to a respective physical interface circuit 3.The physical interface circuits implement the physical interface layer of the IEEE 802.3 standard. When a packet is being received by the switch 1, the physical interface 3 converts the data pulses used on the cable to those used in the switch. This may involve data and clock extraction, and pulse reshaping and retiming to the clock signal used in the switch.

The physical interface also generates control signals from the control signals received via the cable.

The received data and the control signals are transmitted from each physical interface to a switch integrated circuit 4 via a respective set of conductors 5. The signals from each physical interface are transmitted to a respective media access controller 6 within the switch integrated circuit 4. The media access controller 6 implements the media access control layer of the IEEE 802.3 standard. One function of each media access controller 6 is to form the successive individual data bits received from the respective physical interface circuit into the data words that are manipulated by the switch integrated circuit. The media access controller 6 also provides status bits indicating, for example, that the word is the last in a series derived from a single packet.

The words compiled by the media access controller 6 are stored in a respective receive first-in-first-out (FIFO) buffer 7. The destination network address of a packet stored, or that is in the process of being stored, in a first-in-first-out buffer 7 is read by an address compare circuit 8 which compares it with those collected from or assigned to the devices on the network to determine which media access controller 6 it should be sent to. A packet is either stored for a period in an external bank of random access memory 9 or is forwarded immediately to a transmit first-in-first-out buffer 10 respective to that media access controller 6 depending on whether that media access controller is busy and whether there are any packets for that media access controller waiting in the random access memory 9.

If a packet is transferred immediately, this is known as cut-through operation. If it is stored first in the memory 9, this is known as store and forward operation.

The storing and retrieving of packets in the random access memory 9 are organised by a queue manager circuit 11.

For transmission, the data of a packet held in a first-in-first-out buffer 10 is serialised into single bits by the respective media access controller 6 which also generates appropriate accompanying control signals, using the status bits as necessary. The serialised data and the control signals are transmitted to the respective physical interface circuit 3 via the conductors 5. The physical interface circuit generates and transmits to the network cables the pulses having the timing and shape used for those cables.

In one known form, a switch integrated circuit 4 has nine pins for connection to a set of the conductors 5: two for data (one for each direction) and seven for control signals. That device has 24 such sets pins, known as ports, and so consequently has 216 pins for just those connections.

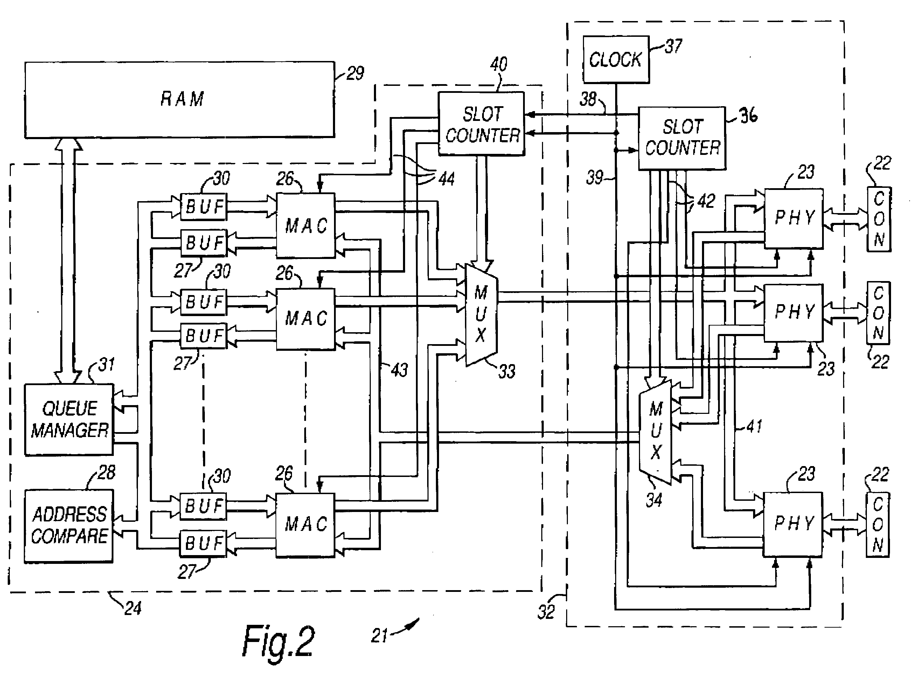

Figure 2 is a block diagram of an example of a switch circuit according to the present invention. The exemplified switch circuit 21 comprises a switch integrated circuit 24 comprising media access controllers 26, receive and transmit first-in-first-out buffers 27 and 30, an address compare circuit 28 and a queue manager circuit 31, all similar in function to the corresponding circuits in the circuit of Figure 1. The switch circuit 21 stores packets in a random access memory 29 in a similar manner to the circuit of Figure 1.

The switch circuit 21 comprises a physical interface integrated circuit 32 which comprises a plurality of physical interface circuits 23 which are respectively connected, externally to the integrated circuit 32, to connectors 22 for network cables (not shown). The physical interface circuits reshape and retime the data pulses used in the switch to those used on the network cables and vice versa. They also convert the control signals between those two pulse forms.

The integrated circuits 24 and 32 are connected to each other via a set of conductors. This set comprises only 15 conductors: 8 data lines (4 in each direction) and 7 control lines. The control lines carry similar signals to those passed between the media access controllers and the physical interface circuits of the circuit of Figure 1. The use of the conductors is, however, time divided between media access controllers and respective physical interface circuits. Preferably data is transferred between the switch integrated circuit 24 and the physical interface integrated circuit in four bit parallel words (which is in contrast to the circuit of Figure 1 in which single bits are transmitted).

To manage the allocation of time slots to the media access controller and physical interface pairs, the physical interface integrated circuit 32 comprises a slot counter circuit 36 and a clock circuit 37. The slot counter 36 generates a synchronising signal 38 in response to the clock signal 39.

The switch integrated circuit 24 also has a slot counter circuit 40 which is connected to receive the synchronising and clock signals form the physical interface circuit 32.

Both slot counters count the pulses of the clock signal 39. The slot counter 40 of the switch integrated circuit 24 is reset by the synchronising signal which is generated by the slot counter 36 of the physical interface integrated circuit 32 each time it reaches a maximum count and resets itself. In this way both counters are, in operation, always at the same value. (The operation of the circuit during an initial phase is discussed below.)

The physical interface integrated circuit 32 and the switch integrated circuit 24 communicate as follows.

The values stored in the slot counters label successive time slots during which a media access controller 26 transmits a four bit data word to the physical interface integrated circuit 32 and a physical interface circuit 23 transmits a four bit data word and associated control signals to the switch integrated circuit 24.

The circuits are so arranged that a particular media access controller 26 transmits to and receives from only a particular one of the physical interface circuits 23 and that physical interface circuit transmits to and receives from that media access controller only. Each pair of a media access controller and its respective physical interface circuit are assigned a particular numbered slot for transmission from the physical interface circuit to the media access controller. Transmission in the opposite direction does not occur during the same slot, however, but a number of, typically two, slots later. This allows the media access controller to respond rapidly to signals received over the network cable attached to the physical interface circuit. If the same slot were used for transmission in both directions, the media access controller would receive from the physical interface circuit during the numbered slot but would have to wait until that numbered slot occurred again before responding.

The slot counters 36 and 40 of the physical interface and switch integrated circuits 32 and 24 output their counts to the respective multiplexers 34 and 33. In the switch integrated circuit the multiplexer 33 selects in response to the count of the slot counter 40 a media access controller 26 and transmits a four bit data word and associated control signals from that media access controller to the physical interface circuit integrated circuit 32. At the same time in the physical interface integrated circuit 32, the multiplexer 34 selects in response to the count of the slot counter 36 a physical interface circuit 23 and transmits from that physical interface circuit a four bit data word and associated control signals to the switch integrated circuit 24.

In the physical interface circuit 32, the data and associated control signals received from the switch integrated circuit 24 are presented via a bus 41 to latches in each of the physical interface circuits 23. The slot counter 36 provides a respective latching signal for each physical interface circuit 23 on conductors 42. Each time the count is incremented the slot counter generates a pulse on only one of the conductors 42, that one corresponding to the value of the count, and in response only one of the physical interface circuits 23 latches the data received from the switch integrated circuit 24.

In the switch integrated circuit 24, the data and associated control signals received from the physical interface integrated circuit 32 are presented to all of the media access controllers 26 via a bus 43. The slot counter 40 also generates a set of latching signals on conductors 44. Again a pulse is generated on only one of those conductors at each count, the particular one corresponding to the count, and only one of the media access controllers 26 latches the data received from the physical interface integrated circuit 32.

The physical interface circuits shown in Figure 2 serialise the four bit data words for transmission over the network cables. The single bits received over the network cables are formed into four bit parallel words by the physical interface circuits 23 for transmission to the media access controllers 26.

The successive words transmitted from a particular media access controller circuit to its respective physical interface circuit make up packets that are transmitted over the respective network cable.

In the circuit of Figure 2 there are the same number of physical interface circuits 23 as media access controllers 26 in their respective integrated circuits 32 and 24.

In the circuit illustrated there are eight of each and the physical interface circuit is for a 10 base T Ethernet network connections. These have a bit rate of 10 MHz. Since those bits are compiled into four bit words the lines between the switch and physical interface integrated circuits 24 and 32 need to be operated at a rate of 2.5 MHz for each network connection, i.e. at 20 MHz, which is well within the capability of current integrated circuit technology.

Another example of a physical interface integrated circuit 32 similar to that of Figure 2 contains only four physical interface circuits and accordingly generates one synchronising signal for every four cycles of its clock circuit 37. If that were connected to the switch interface circuit 24 of Figure 2 which has eight media access controllers 26, the slot counter 40 would reset every four clock cycles and so only four media access controllers would communicate with the physical interface circuits. The other four media access controllers would not receive any data from the network and so appear to the queue manager 31 as disconnected. In this example the clock 37 operates at half the rate of that of the example of Figure 2 so that each media access controller still sends and receives four bit words at a rate of 2.5 MHz.

In another example of a physical interface integrated circuit containing only four physical interface circuits, the synchronising pulse is still generated every 400 ns as in the example of Figure 2 but within each 400 ns period the clock generates four pulses at a rate of 20 MHz during the first half of the period and then provides a constant level for the second half. When such a physical interface integrated circuit is connected to the switch integrated circuit of Figure 2, the slot counter 40 of that switch integrated circuit again only counts though four slots, after which it will wait for 200 ns before resetting. Again only four media access controllers will operate.

In a further example, a physical interface integrated circuit is like that of Figure 2 but has twelve physical interface circuits 23 and has a clock that operates at 20 MHz and a slot counter 36 that counts through twelve states and produces a synchronising pulse every 600 ns. When connected to the switch interface circuit of Figure 2 the slot counter 40 of that switch integrated circuit counts through twelve states before resetting. For the last four states it does not generate a pulse on any of the lines 44 so that no media access controller 26 receives from the physical interface integrated circuit; it also provides a signal to the multiplexer 33 so that it produces an inactive output. The final four physical interface circuits 23 of the physical interface integrated circuit of this example are therefore unusable, but the other eight remain functional nevertheless.

A switch integrated circuit may have further media access controllers 26 grouped for connection to a single set of multiplexed pins in the manner of the example of Figure 2. Also it may have media access controllers each having their own set of pins for communication with a single physical interface circuit.

In yet another example of a physical interface integrated circuit 32 the slot counter 36 is connected to detect physical interface circuits not having a functioning link to a network device and is arranged to omit states for those. The synchronising signal occurs correspondingly more frequently. In a connected switch integrated circuit only a number of media access controllers 26 equal to the number of physical interface circuits 23 in use are utilised. In a more advanced example of a switch integrated circuit the unused media access controllers may be allocated to a physical interface circuit of another physical interface integrated circuit.

In another example a single port of a switch integrated circuit of the example of Figure 2 is connected to two or more physical interface integrated circuits 32, each containing several physical interface circuits 23, arranged to appear to the switch integrated circuit as one large physical interface integrated circuit. This is achieved by a master one of the physical interface integrated circuits providing the clock signal for all and providing a signal to the second physical interface integrated circuit once all of its own physical interface circuits have sent their data to the switch integrated circuit. On reception of that signal the second physical interface integrated circuit then allows its physical interface circuits to send their data in the subsequent time slots. Each physical interface circuit signals the next in turn until the last which then signals the first that it is its turn again. A daisy chain arrangement for the control signals has been described. Alternatively the physical interface integrated circuit could have mode pins for signals designating whether it is the master, second, third and so on.

In this example of two or more physical interface circuits connected to a single port of a switch integrated circuit, the physical interface integrated circuits have all their pins for communicating with the switch integrated circuit connected in common, except the clock and synchronising signal pins. Only the active physical interface integrated circuit asserts the output pins of its multiplexer 34. The output pins of the multiplexers 34 of the others are set to a high impedance state. Since there is a number of slots difference, typically two, between when a physical interface circuit 23 transmits to and when it receives from the switch integrated circuit, there are times when a physical interface circuit on one physical interface integrated circuit is transmitting and a physical interface circuit on another is receiving.

Returning to the example of Figure 2, the initial synchronisation of the switch integrated circuit 24 and physical interface integrated circuit 32 are now described. It is apparent from the above examples that the switch integrated circuit is constructed so that it may be connected to physical interface integrated circuits containing different numbers of physical interface circuit 23. On power up or reset, the switch interface circuit 24 has no information on the number of physical interface circuits 23 to which it is connected.

On generation of the first synchronising signal, a first physical interface circuit 23 is allocated to transmit a data word and associated control signals and a first media access controller is allocated to receive that. Now, each media access controller 26 transmits two a number of slots, typically two, after it receives, so the next to last media access controller 26 should be allocated in the first time slot to transmit to the next to last physical interface circuit 23. Which media access controller that is cannot be determined because the switch integrated circuit does not yet know the number of media interface access circuits 26 to be used. That becomes apparent only when the switch integrated circuit 24 receives the second synchronising signal after power up or reset. Therefore the switch interface circuit is arranged to output inactive control signals until the second synchronising signal has been received.

In one embodiment allowance is made for small drifts in the rate of data being received by a physical interface circuit 23 from that expected. If the data is arriving at a physical interface circuit too slowly for the physical interface circuit to have a group of four bits ready for transmission to the switch integrated circuit 24 when its slot occurs, a data valid signal among the control signals that are transmitted from the physical interface circuit 23 is set to a false value to indicate that the data signals are not valid. The corresponding media access controller 26 responds by not appending the data received during that slot to the current packet and waiting until the next slot.

Media access controllers 26 may be arranged to interpret the data valid signal having a false value as indicating that the packet has finished and provides a control signal to the rest of the switch integrated circuit 24 accordingly. In the present embodiment, however, a data valid signal having a false value may be caused by a slow rate of data being received by the physical interface circuit 23. The media access controllers 26 are therefore arranged to signal an end of packet condition only once the data valid signal has been false for two successive slots.

If the data rate is received by a physical interface circuit 23 is higher than expected the data received is buffered in that physical interface circuit until it is sent to the switch integrated circuit 24.

Gross variations in the data rate from that expected are not handled by these measures.

## Claims

1. An integrated circuit (24) for switching packets of data comprising,
a port comprising a plurality of terminals of the integrated circuit through which packets are received and transmitted,
a plurality of transceiver circuits (26) into which packets from the port are received and from which packets are transmitted to the port,
switching means (28,29,31) for transferring packets between the transceiver circuits, and
multiplexing means (33,43) for connecting the transceiver circuits to the port during successive periods of time.

2. An integrated circuit as claimed in claim 1 so arranged that a transceiver circuit (26) transmits to the port during a different one of the said periods from the one of the said periods during which it receives from the port.

3. An integrated circuit as claimed in claim 2 so arranged that a transceiver circuit (26) transmits to the port two of the said periods later than it receives from the port.

4. An integrated circuit as claimed in any preceding claim wherein a plurality of data bits of a packet and/or successive values of a control signals may be transmitted via the port in parallel at the same time.

5. An integrated circuit as claimed in any preceding claim arranged to transmit only a single data bit of a packet or value of a control signal via a terminal of the port during one of the said periods.

6. An integrated circuit as claimed in any preceding claim, arranged to transmit a plurality of data bits of a packet and/or values of control signals via a terminal of the port during one of the said periods, that plurality being provided by the transceiver circuit (26) corresponding to that period.

7. An integrated circuit as claimed in any preceding claim comprising a counter (40) for determining which of the transceiver circuits (26) is connected to the port during a particular one of the said periods, wherein that counter is arranged to be reset by a signal (38) from a terminal of the integrated circuit.

8. An integrated circuit as claimed in any preceding claim wherein the multiplexing means (33,43) comprises a multiplexer (33) for selecting from the outputs of the transceiver circuits (26) the outputs of a selected transceiver and connecting those outputs to the output terminals of the port.

9. An integrated circuit as claimed in any preceding claim wherein the multiplexing means (33) comprises a bus (43) for distributing the signals received on the input terminals of the port to the inputs of all of the transceivers and means for signalling a selected transceiver to latch the signals on the bus.

10. An integrated circuit as claimed in any preceding claim comprising a further port, or ports, via which packets are transmitted or received.

11. An integrated circuit as claimed in claim 10 comprising a further multiplexing means for connecting a second plurality of transceiver circuits to a particular one of the said further ports during successive period of time.

12. An integrated circuit as claimed in claim 10 or claim 11 arranged so that packets transmitted or received by a particular one of said further ports are received in and transmitted from a transceiver circuit corresponding to that port, and arranged so that those packets are received by the transceiver circuit directly from that port and are transmitted by the transceiver directly to that port.

13. An integrated circuit as claimed in any preceding claim wherein a transceiver circuit (26) is arranged to receive a data valid signal from the port during the said periods of time allotted to that transceiver circuit and to form data received from the port into a packet, except for data received when the data valid signal is set to a false value, and the transceiver circuit is arranged to recognise the end of a packet when the data valid signal is set to a false value during two successive ones of the periods allotted to that transceiver.

14. A physical interface integrated circuit (32) comprising,
a plurality of network ports for connection to respective network cables,
a plurality of physical interface circuits (23) each connected to a respective network port for sending and receiving packets by that network port,
a switch port for connection to a switch integrated circuit (24), and
a multiplexing means (34,41) for connecting the physical interface circuits (23) to the switch port during successive periods of time.

15. A physical interface integrated circuit as claimed in claim 14 so arranged that a physical interface circuit (23) transmits to the switch port during a different one of the said periods from the one of the said periods during which it receives from the port.

16. A physical interface integrated circuit as claimed in claim 15 so arranged that a physical interface circuit (23) receives from the switch port two of the said periods later than it transmits the port.

17. A physical interface integrated circuit as claimed any one of claims 14 to 16, arranged so that a plurality of data bits of a packet or successive values of a control signal are transmitted via the switch port in parallel at the same time.

18. A physical interface integrated circuit as claimed in any one of claims 14 to 17 arranged to transmit only a single data bit of a packet or value of a control signal via a terminal of the switch port during one of the said periods.

19. A physical interface integrated circuit as claimed in any one of claims 14 to 18 arranged to transmit a plurality of data bits of a packet and/or values of control signals via a terminal of the switch port during one of the said periods, that plurality being provided by the physical interface circuit (23) corresponding to that period.

20. A physical interface integrated circuit as claimed in any one of claims 14 to 19 comprising a counter (36) for determining which of the physical interface circuits (23) is connected to the switch port during a particular one of the said periods, wherein that counter is arranged to transmit a signal via a terminal of the integrated circuit each time that counter resets.

21. A physical interface integrated circuit as claimed in any one of claims 14 to 20 wherein the multiplexing means (34,41) comprises a multiplexer (34) for selecting from the outputs of the physical interface circuits the outputs of a selected physical interface circuit and connecting those outputs to the output terminals of the switch port.

22. A physical interface integrated circuit as claimed in any one of claims 14 to 21 wherein the multiplexing means (34,41) comprises a bus (41) for distributing the signals received on the input terminals of the switch port to the inputs of all of the physical interface circuits and means for signalling a selected physical interface circuit to latch the signals on the bus.

23. A physical interface integrated circuit as claimed in any one of claims 14 to 22, wherein a physical interface circuit (23) is arranged to transmit a data valid signal to the switch port and to set that signal to a false value when it has not received from its network port enough data to transmit via the switch port.

24. A switch circuit comprising a circuit board and connected to each other on that circuit board an integrated circuit (21) for switching packets of data as claimed in any one of claims 1 to 13 and at least one physical interface integrated circuit (32) as claimed in any one of claims 14 to 23.

## Patentansprüche

1. Integrierte Schaltung (24) zum Vermitteln von Datenpaketen mit
einem Port mit mehreren Anschlüssen der integrierten Schaltung, worüber Pakete empfangen und gesendet werden,
mehreren Transceiver-Schaltungen (26), an denen Pakete von dem Port empfangen werden und von denen Pakete zu dem Port gesendet werden,
Schalteinrichtungen (28, 29, 31) zum Übertragen von Paketen zwischen den Transceiver-Schaltungen und
eine Multiplexiereinrichtung (33, 43) zum Verbinden der Transceiver-Schaltungen mit dem Port während aufeinander folgender Zeiträume.

2. Integrierte Schaltung nach Anspruch 1, die so eingerichtet ist, dass eine Transceiver-Schaltung (26) während einer Periode, die von derjenigen Periode, während derer sie von dem Port empfängt, verschieden ist, zu dem Port sendet.

3. Integrierte Schaltung nach Anspruch 2, die so eingerichtet ist, dass eine Transceiver-Schaltung (26) zwei Perioden nach einem Empfang von dem Port zu dem Port sendet.

4. Integrierte Schaltung nach einem der vorstehenden Ansprüche, wobei mehrere Datenbits eines Pakets und/oder aufeinander folgende Werte eines Steuersignals gleichzeitig parallel über den Port gesendet werden können.

5. Integrierte Schaltung nach einem der vorstehenden Ansprüche, die dafür eingerichtet ist, nur ein einziges Datenbit eines Pakets oder einen einzigen Wert eines Steuersignals über einen Anschluss des Ports während einer der Perioden zu senden.

6. Integrierte Schaltung nach einem der vorstehenden Ansprüche, die dafür eingerichtet ist, eine Anzahl von Datenbits eines Pakets und/oder Werten von Steuersignalen über einen Anschluss des Ports während einer der Perioden zu senden, wobei diese Anzahl durch die Transceiver-Schaltung (26), entsprechend dieser Periode, bereitgestellt wird.

7. Integrierte Schaltung nach einem der vorstehenden Ansprüche mit einem Zähler (40) zum Bestimmen, welche der Transceiver-Schaltungen (26) während einer bestimmten der Perioden mit dem Port verbunden ist, wobei dieser Zähler dafür eingerichtet ist, durch ein Signal (38) von einem Anschluss der integrierten Schaltung zurückgesetzt zu werden.

8. Integrierte Schaltung nach einem der vorstehenden Ansprüche, wobei die Multiplexiereinrichtung (33, 43) einen Multiplexer (33) zum Auswählen der Ausgaben eines ausgewählten Transceivers aus den Ausgaben der Transceiver-Schaltungen (26) und zum Verbinden dieser Ausgaben mit den Ausgangsanschlüssen des Ports aufweist.

9. Integrierte Schaltung nach einem der vorstehenden Ansprüche, wobei die Multiplexiereinrichtung (33) einen Bus (43) zum Verteilen der an den Eingangsanschlüssen des Ports empfangenen Signale an die Eingänge aller Transceiver und eine Einrichtung, um einem ausgewählten Transceiver zu signalisieren, dass er die Signale auf den Bus schalten soll, aufweist.

10. Integrierte Schaltung nach einem der vorstehenden Ansprüche mit einem weiteren Port oder weiteren Ports, über die Pakete gesendet oder empfangen werden.

11. Integrierte Schaltung nach Anspruch 10 mit einer weiteren Multiplexiereinrichtung zum Verbinden einer zweiten Anzahl von Transceiver-Schaltungen mit einem bestimmten der weiteren Ports während aufeinander folgender Zeiträume.

12. Integrierte Schaltung nach Anspruch 10 oder 11, die so eingerichtet ist, dass von einem bestimmten der weiteren Ports gesendete oder empfangene Pakete in einer diesem Port entsprechenden Transceiver-Schaltung empfangen und von dieser gesendet werden, und die so eingerichtet ist, dass diese Pakete durch die Transceiver-Schaltung direkt von diesem Port empfangen werden und durch den Transceiver direkt zu diesem Port gesendet werden.

13. Integrierte Schaltung nach einem der vorstehenden Ansprüche, wobei eine Transceiver-Schaltung (26) dafür eingerichtet ist, ein Daten-gültig-Signal während der Zeiträume, die dieser Transceiver-Schattung zugeordnet sind, von dem Port zu empfangen, und von dem Port empfangene Daten, mit Ausnahme von Daten, die empfangen werden, wenn das Daten-gültig-Signal auf einen Falsch-Wert gesetzt ist, zu einem Paket zu formen, und die Transceiver-Schaltung dafür eingerichtet ist, das Ende eines Pakets zu erkennen, wenn das Daten-gültig-Signal während zweier aufeinander folgender diesem Transceiver zugeordneter Perioden auf einen Falsch-Wert gesetzt ist.

14. Integrierte physikalische Schnittstellenschaltung (32) mit
mehreren Netzwerkports zur Verbindung mit jeweiligen Netzwerkkabeln,
mehreren physikalischen Schnittstellenschaltungen (23), die jeweils mit einem jeweiligen Netzwerkport verbunden sind, um Pakete über diesen Netzwerkport zu senden und zu empfangen,
einem Switch-Port zur Verbindung mit einer integrierten Switch-Schaltung (24) und
einer Multiplexiereinrichtung (34, 41) zum Verbinden der physikalischen Schnittstellenschaltungen (23) mit dem Switch-Port während aufeinander folgender Zeiträume.

15. Integrierte physikalische Schnittstellenschaltung nach Anspruch 14, die so eingerichtet ist, dass eine physikalische Schnittstellenschaltung (23) während einer Periode, die von derjenigen Periode verschieden ist, während derer sie von dem Port empfängt, zu dem Switch-Port sendet.

16. Integrierte physikalische Schnittstellenschaltung nach Anspruch 15, die so eingerichtet ist, dass eine physikalische Schnittstellenschaltung (23) zwei Perioden nach dem Senden zu dem Port von dem Switch-Port empfängt.

17. Integrierte physikalische Schnittstellenschaltung nach einem der Ansprüche 14 bis 16, die so eingerichtet ist, dass mehrere Datenbits eines Pakets oder aufeinander folgende Werte eines Steuersignals über den Switch-Port gleichzeitig parallel gesendet werden.

18. Integrierte physikalische Schnittstellenschaltung nach einem der Ansprüche 14 bis 17, die dafür eingerichtet ist, nur ein einziges Datenbit eines Pakets oder einen einzigen Wert eines Steuersignals über einen Anschluss des Switch-Ports während einer der Perioden zu senden.

19. Integrierte physikalische Schnittstellenschaltung nach einem der Ansprüche 14 bis 18, die dafür eingerichtet ist, eine Anzahl von Datenbits eines Pakets und/oder von Werten von Steuersignalen über einen Anschluss des Switch-Ports während einer der Perioden zu senden, wobei diese Anzahl durch die physikalische Schnittstellenschaltung (23), entsprechend dieser Periode, bereitgestellt wird.

20. Integrierte physikalische Schnittstellenschaltung nach einem der Ansprüche 14 bis 19 mit einem Zähler (36) zum Bestimmen, welche der physikalischen Schnittstellenschaltungen (23) während einer bestimmten der Perioden mit dem Switch-Port verbunden ist, wobei dieser Zähler dafür eingerichtet ist, jedes Mal dann, wenn dieser Zähler zurückgesetzt wird, ein Signal über einen Anschluss der integrierten Schaltung zu senden.

21. Integrierte physikalische Schnittstellenschaltung nach einem der Ansprüche 14 bis 20, wobei die Multiplexiereinrichtung (34, 41) einen Multiplexer (34) zum Auswählen der Ausgaben einer ausgewählten physikalischen Schnittstellenschaltung aus den Ausgaben der physikalischen Schnittstellenschaltungen und zum Verbinden dieser Ausgaben mit den Ausgangsanschlüssen des Switch-Ports aufweist.

22. Integrierte physikalische Schnittstellenschaltung nach einem der Ansprüche 14 bis 21, wobei die Multiplexiereinrichtung (34, 41) einen Bus (41) zum Verteilen der an den Eingangsanschlüssen des Switch-Ports empfangenen Signale an die Eingänge aller physikalischen Schnittstellenschaltungen und eine Einrichtung, um einer ausgewählten physikalischen Schnittstellenschaltung zu signalisieren, dass sie die Signale auf den Bus schalten soll, aufweist.

23. Integrierte physikalische Schnittstellenschaltung nach einem der Ansprüche 14 bis 22, wobei die physikalische Schnittstellenschaltung (23) dafür eingerichtet ist, ein Daten-gültig-Signal zum Switch-Port zu senden und dieses Signal auf einen Falsch-Wert zu setzen, wenn sie von ihrem Netzwerk-Port nicht genug Daten zum Senden über den Switch-Port empfangen hat.

24. Switch-Schaltung mit einer Platine, wobei auf dieser Platine eine integrierte Schaltung (21) zum Vermitteln von Datenpaketen nach einem der Ansprüche 1 bis 13 und mindestens eine integrierte physikalische Schnittstellenschaltung (32) nach einem der Ansprüche 14 bis 23 miteinander verbunden sind.

## Revendications

1. Circuit intégré (24) destiné à commuter des paquets de données, comprenant :
un port comprenant une pluralité de terminaux du circuit intégré à travers lesquels des paquets sont reçus et transmis,
une pluralité de circuits d'émetteur-récepteur (26) vers l'intérieur desquels des paquets provenant du port sont reçus et depuis lesquels des paquets sont transmis vers le port,
un moyen de commutation (28, 29, 31) destiné à transférer des paquets entre les circuits d'émetteur-récepteur, et
un moyen de multiplexage (33, 43) destiné à connecter les circuits d'émetteur-récepteur au port pendant des périodes de temps successives.

2. Circuit intégré selon la revendication 1, aménagé de telle manière qu'un circuit d'émetteur-récepteur (26) transmet vers le port pendant une période, desdites périodes, différente de la période, desdites périodes, pendant laquelle il reçoit depuis le port.

3. Circuit intégré selon la revendication 2, aménagé de telle manière qu'un circuit d'émetteur-récepteur (26) transmet vers le port deux périodes plus tard, desdites périodes, qu'il ne reçoit depuis le port.

4. Circuit intégré selon l'une quelconque des revendications précédentes, dans lequel une pluralité de bits de données d'un paquet et/ou de valeurs successives d'un signal de commande peuvent être transmis(es) parallèlement par l'intermédiaire du port, au même moment.

5. Circuit intégré selon l'une quelconque des revendications précédentes, aménagé de manière à ne transmettre qu'un seul bit de données d'un paquet ou à ne transmettre qu'une seule valeur d'un signal de commande par l'intermédiaire d'un terminal du port pendant l'une desdites périodes.

6. Circuit intégré selon l'une quelconque des revendications précédentes, aménagé de manière à transmettre une pluralité de bits de données d'un paquet et/ou de valeurs de signaux de commande par l'intermédiaire d'un terminal du port pendant l'une desdites périodes, cette dernière pluralité étant fournie par le circuit d'émetteur-récepteur (26) correspondant à cette dernière période.

7. Circuit intégré selon l'une quelconque des revendications précédentes, comprenant un compteur (40) destiné à déterminer lequel des circuits d'émetteur-récepteur (26) est connecté au port pendant une période particulière, desdites périodes, dans lequel ce dernier compteur est aménagé de manière à être remis à l'état initial par un signal (38) provenant d'un terminal du circuit intégré.

8. Circuit intégré selon l'une quelconque des revendications précédentes, dans lequel le moyen de multiplexage (33, 43) comprend un multiplexeur (33) destiné à sélectionner, parmi les sorties des circuits d'émetteur-récepteur (26), les sorties d'un émetteur-récepteur sélectionné et à connecter ces dernières sorties aux terminaux de sortie du port.

9. Circuit intégré selon l'une quelconque des revendications précédentes, dans lequel le moyen de multiplexage (33) comprend un bus (43) destiné à distribuer les signaux reçus sur les terminaux d'entrée du port vers les entrées de tous les émetteurs-récepteurs, et des moyens destinés à signaler à un émetteur-récepteur sélectionné de basculer les signaux sur le bus.

10. Circuit intégré selon l'une quelconque des revendications précédentes, comprenant un port supplémentaire, ou des ports supplémentaires, par l'intermédiaire duquel (desquels) des paquets sont transmis ou reçus.

11. Circuit intégré selon la revendication 10, comprenant un moyen supplémentaire de multiplexage, destiné à connecter une deuxième pluralité de circuits d'émetteur-récepteur à un port particulier, desdits ports supplémentaires, pendant une période de temps successive.

12. Circuit intégré selon la revendication 10 ou la revendication 11, aménagé de telle manière que des paquets transmis ou reçus par un port particulier, desdits ports supplémentaires, sont reçus dans et transmis depuis un circuit d'émetteur-récepteur correspondant à ce dernier port, et aménagé de telle manière que ces derniers paquets sont reçus par le circuit d'émetteur-récepteur directement depuis ce dernier port et sont transmis par l'émetteur-récepteur directement vers ce dernier port.

13. Circuit intégré selon l'une quelconque des revendications précédentes, dans lequel un circuit d'émetteur-récepteur (26) est aménagé de manière à recevoir un signal de validité de données depuis le port pendant lesdites périodes de temps allouées à ce dernier circuit d'émetteur-récepteur et à former en un paquet des données reçues depuis le port, à l'exception de données reçues lorsque le signal de validité de données est établi à une valeur fausse, et le circuit d'émetteur-récepteur est aménagé de manière à reconnaître l'extrémité d'un paquet lorsque le signal de validité de données est établi à une valeur fausse pendant deux périodes successives, des périodes allouées à ce dernier émetteur-récepteur.

14. Circuit intégré d'interface physique (32), comprenant :
une pluralité de ports de réseau destinés à la connexion à des câbles de réseau respectifs,
une pluralité de circuits d'interface physique (23), chacun étant connecté à un port de réseau respectif, destiné à envoyer et à recevoir des paquets par ce dernier port de réseau,
un port de commutation destiné à la connexion à un circuit intégré de commutateur (24), et
un moyen de multiplexage (34, 41) destiné à connecter les circuits d'interface physique (23) au port de commutation pendant des périodes de temps successives.

15. Circuit intégré d'interface physique selon la revendication 14, aménagé de telle manière qu'un circuit d'interface physique (23) transmet vers le port de commutation pendant une période différente, desdites périodes, de celle desdites périodes pendant laquelle il reçoit depuis le port.

16. Circuit intégré d'interface physique selon la revendication 15, aménagé de telle manière qu'un circuit d'interface physique (23) reçoit depuis le port de commutation deux périodes plus tard, desdites périodes, qu'il ne transmet vers le port.

17. Circuit intégré d'interface physique selon l'une quelconque des revendications 14 à 16, aménagé de telle manière qu'une pluralité de bits de données d'un paquet ou de valeurs successives d'un signal de commande sont transmis(es) parallèlement par l'intermédiaire du port de commutation, au même moment.

18. Circuit intégré d'interface physique selon l'une quelconque des revendications 14 à 17, aménagé de manière à ne transmettre qu'une seule valeur de bit d'un paquet ou à ne transmettre qu'une seule valeur d'un signal de commande, par l'intermédiaire d'un terminal du port de commutation, pendant l'une desdites périodes.

19. Circuit intégré d'interface physique selon l'une quelconque des revendications 14 à 18, aménagé de manière à transmettre une pluralité de bits de données d'un paquet et/ou de valeurs de signaux de commande par l'intermédiaire d'un terminal du port de commutation pendant l'une desdites périodes, cette dernière pluralité étant fournie par le circuit d'interface physique (23) correspondant à cette dernière période.

20. Circuit intégré d'interface physique selon l'une quelconque des revendications 14 à 19, comprenant un compteur (36) destiné à déterminer lequel des circuits d'interface physique (23) est connecté au port de commutation pendant une période particulière desdites périodes, dans lequel ce dernier compteur est aménagé de manière à transmettre un signal par l'intermédiaire d'un terminal du circuit intégré à chaque fois que ce dernier compteur se remet à l'état initial.

21. Circuit intégré d'interface physique selon l'une quelconque des revendications 14 à 20, dans lequel le moyen de multiplexage (34, 41) comprend un multiplexeur (34) destiné à sélectionner, parmi les sorties des circuits d'interface physique, les sorties d'un circuit d'interface physique sélectionné et à connecter ces dernières sorties aux terminaux de sortie du port de commutation.

22. Circuit intégré d'interface physique selon l'une quelconque des revendications 14 à 21, dans lequel le moyen de multiplexage (34, 41) comprend un bus (41) destiné à distribuer les signaux reçus sur les terminaux d'entrée du port de commutation aux entrées de tous les circuits d'interface physique, et un moyen destiné à signaler à un circuit d'interface physique sélectionné de basculer les signaux sur le bus.

23. Circuit intégré d'interface physique selon l'une quelconque des revendications 14 à 22, dans lequel un circuit d'interface physique (23) est aménagé de manière à transmettre un signal de validité de données vers le port de commutation et à établir ce dernier signal à une valeur fausse lorsqu'il n'a pas reçu, depuis son port de réseau, suffisamment de données pour transmettre par l'intermédiaire du port de commutation.

24. Circuit de commutation, comprenant une carte imprimée et, connectés l'un à l'autre sur cette dernière carte imprimée, un circuit intégré (21) destiné à commuter des paquets de données, selon l'une quelconque des revendications 1 à 13, et au moins un circuit intégré d'interface physique (32) selon l'une quelconque des revendications 14 à 23.
